# EUROPEAN PATENT APPLICATION

(11) **EP 2 372 246 A2**
(43) Date of publication of application: **05.10.2011**
(21) Application number: 11250302.4
(22) Date of filing: 14.03.2011
(51) Int. Cl.: F23N 5/16

(54) **Fibre optic microphones for active combustion control**

(30) Priority: 30.03.2010 US 798095
(71) Applicant: ROSEMOUNT AEROSPACE INC., Burnsville, MN 55306-4898 (US)
(72) Inventor: Meneely, Clinton T., Burnsville Minnesota 55306 (US); Myhre, Douglas C., Eden Prairie Minnesota 55346 (US); Michel, Joseph R., St Paul Minnesota 55105 (US); Aadland, Tim, Lakeville Minnesota 55044 (US)
(74) Representative: Hargreaves, Timothy Edward

(57) **Abstract**

Disclosed is a fuel injector (110) for a gas turbine engine combustor that includes a fuel nozzle (126) for injecting fuel into the gas turbine engine combustor and a fiber optic microphone (140) operatively associated with the fuel nozzle for measuring acoustic pressure differentials within a combustion chamber (14) of the gas turbine engine combustor. The fiber optic microphone includes a fiber bundle having at least one light transmitting fiber and one light receiving fiber; and a dynamic pressure-sensing diaphragm operatively spaced apart from a sensing end of the fiber bundle. The diaphragm has a reflective surface and is formed from a material capable of withstanding temperatures associated with flame exposure. The diaphragm is adapted and configured for deflecting in response to acoustic pressure changes within the combustion chamber. The fuel injector can further include a mechanism for measuring the temperature of the diaphragm, so as to account for changes in the material properties of the diaphragm caused by temperature changes in the combustion chamber.

## Description

### BACKGROUND OF THE INVENIION

### 1. Field of the Invention

The subject invention is direct to fiber optic microphones for gas turbine engines and methods of using the same, and more particularly, to fiber optic microphones used to measure acoustic pressure differentials within the combustion chamber of a gas turbine engine, so as to detect in real-time combustion instabilities and the like.

### 2. Background of the Related Art

Combustion instability is a significant problem in the design of low-emission, high performing combustion chambers for gas turbines Combustion instability diminishes engine system Performance, and the vibrations resulting from pressure oscillations can damage hardware components, including the combustion chamber itself. Combustion instability is generally understood as high amplitude pressure oscillations that occur as a result of the unstable coherent flow structures that develop from the turbulent nature of the combustion process and the large volumetric energy release within the combustion chamber.

There are many factors that contribute to combustion instability within the combustion chamber of a gas turbine. Those include, for example, the fuel content, fuel and/or air injection speed or inlet pressure, fuel/air concentration/ratio, temperature changes within the combustion chamber, the stability of the flame, large scale coherent flow structures affecting mixing (i.e., vortex shedding), the coupling of acoustic pressure waves with combustion heat release at combustor resonance frequencies, and/or extinction/re-ignition phenomenon occurring at low flame temperature and high combustion pressure.

In the past, passive control methods were employed to correct combustion instability, including, for example, modifying the fuel injection distribution pattern, or changing the shape or capacity of the combustion chamber. Passive controls are often costly and limit combustor performance. More recently, active control methods have been used to correct combustion instability by modifying the pressure within the system. This is done by sensing the amplitudes and frequencies of the acoustic pressure waves within the combustion chamber and then modulating the fuel injection at the same frequencies, but out of phase with the instabilities.

U.S. Patent Application Publication No. 2007/0119147 discloses an active combustion control system; the disclosure of which is herein incorporated by reference in its entirety. The disclosed active combustion control system uses one or more dynamic pressure sensors for measuring the amplitude of the acoustic pressure changes within the combustion chamber. More specifically, piezoelectric devices are mounted on the feed arms of the fuel injectors, upstream from the combustion chamber and these devices measure the acoustic pressure differentials within the combustion chamber.

Several problems exist with using conventional piezoelectric devices for sensing the acoustic pressure fluctuations in the combustion chamber: 1) the temperatures in the combustion chamber range from 250 to 500° C; 2) timing is critical; instantaneous changes in the pressure must be monitored in real time; and 3) the size of these sensors.

Piezoelectric sensors are not suitable for high temperature applications and therefore, they can not be mounted within the combustion chamber and need to be mounted well behind the injector nozzle. Also their physical size prohibits them from being mounted within the fuel flow path because they would otherwise cause flow instabilities. As a result, piezoelectric sensors have to remotely located to a more benign environment, which reduces the accuracy of the measurement and timing with which the phase relationship of the instability can be measured (i.e. there is a longer time delay for sound traveling from the flame instability to the dynamic pressure sensor).

It would be beneficial therefore, to provide a dynamic pressure sensor for use in active combustion control systems for gas turbine engines that can be positioned in close proximity to or partially exposed within the combustion chamber.

### SUMMARY OF THE INVENTION

The subject invention is directed to a fuel injector for a gas turbine engine combustor that includes, *inter alia*, a fuel nozzle for injecting fuel into the gas turbine engine combustor and a fiber optic microphone operatively associated with the fuel nozzle for measuring the amplitude and phase of acoustic pressure differentials within a combustion chamber of the gas turbine engine combustor. The fiber optic microphone includes a fiber bundle that has at least one light transmitting fiber and at least one light receiving fiber, and a dynamic pressure-sensing diaphragm operatively spaced apart from a sensing end of the fiber bundle. The diaphragm has a reflective surface which faces the sensing end of the fiber bundle. The diaphragm is formed from a material capable of withstanding temperatures associated with the combustion process and is adapted and configured for deflecting in response to acoustic pressure changes within the combustion chamber.

The fiber optic microphone further includes a light source and an optical detector. The light source supplies light to the at least one light transmitting fiber of the fiber bundle at a first intensity, so as to illuminate the reflective surface of the diaphragm. The optical detector measures a second intensity of the light reflected by the diaphragm onto the light receiving fiber, whereby a dynamic comparison of the first intensity to the second intensity is indicative of the acoustic pressure differentials within the combustion chamber.

In a preferred embodiment of the present invention, the transmission and receiving fibers are made from silica and are coated with gold. Still further, in certain constructions it is envisioned that the transmission and receiving fibers have a 200 micron core diameter. Preferably, the fiber bundle includes one transmission fiber and six receiving fibers. However, those skilled in the art will readily appreciate that the present invention is not limited to microphones employing one transmission fiber and six receiving fibers. The optimum number of fibers used in a bundle is a function of a variety of factors, such as for example, the size constraints associated with the application, the diameter of the diaphragm, and the signal-to-noise ratio.

It is envisioned that the fiber bundle of the fiber optic microphone can include a crimped metal collet for holding the fibers in a bundle at the sensing end. In certain constructions, the collet is made from platinum or a platinum alloy.

In certain embodiments the fiber optic microphone can include a mechanism for measuring the temperature of the diaphragm. It is envisioned that an optical fiber thermometer (OFT), such as for example, a blackbody sensor, can be used. In such constructions, fibers that are part of the bundle used in the microphone can be used for the OFT. Still further, other devices, such as a thermocouple operatively connected to the diaphragm can be used for measuring the temperature of the diaphragm.

It is further envisioned that a lens can be positioned with a chamber defined between the sensing end of the fiber bundle and the diaphragm.

The fiber bundle of the microphone is preferably inserted at least partly within a guide tube which protects the bundle from damage and facilitate handling during installation. It is also envisioned that the fiber optic microphone is mounted at least partially within a port of passage formed in the injector nozzle. In certain constructions the diaphragm is positioned within the passage or port, but such that the acoustic pressure waves emanating from the combustion chamber are unimpeded. Alternatively, the fiber optic microphone is located at least partially within the port formed in the injector nozzle, but extends into the combustion chamber to a location that enables the diaphragm to be in close proximity to the combustor flame.

The present invention is also directed to a system for actively controlling combustion in a combustion chamber of a gas turbine engine which includes, *inter alia*, a fuel injector for issuing fuel into a combustion chamber of a gas turbine engine. The fuel injector includes a fiber optic microphone for measuring acoustic pressure differentials within the combustion chamber; and a flame sensor for observing flame characteristics within the combustion chamber. The system further includes a valve assembly for controlling flow of fuel to the injector; and an electronic controller operatively associated with the fuel injector for commending the valve assembly to deliver fuel to the fuel injector at a commanded flow rate, based at least in part upon the amplitude of the acoustic pressure waves measured by the fiber optic microphone.

Preferably the fiber optic microphone is operatively associated with the fuel injector and includes a fiber bundle having at least one light transmitting fiber and at least one light receiving fiber; and a dynamic pressure-sensing diaphragm operatively spaced apart from a sensing end of the fiber bundle. The diaphragm is formed from a material capable of withstanding temperatures associated with the combustion process and is adapted and configured for defecting in response to acoustic pressure differentials within the combustion chamber.

Certain constructions of the active combustion control system preferably include a plurality of fuel injectors, wherein at least one of the fuel injectors has a fiber optic microphone and a flame sensor. It is envisioned that each of the fuel injectors can include a fiber optic microphone and a flame sensor.

Moreover, certain constructions of the active combustion control system preferably include a plurality of valve assemblies, wherein each valve assembly is operatively associated with at least one fuel injector. It is envisioned that each fuel injector having a fiber optic microphone and a flame sensor, also has a valve assembly operatively associated therewith.

Preferably, the fuel injector incudes an injector body having a nozzle for issuing atomized fuel into the combustion chamber of a gas turbine. It is envisioned that the fiber optic microphone is mounted at least partially within a port of passage formed in the injector nozzle. In certain constructions the diaphragm is positioned within the passage or port, such that the acoustic pressure waves emanating from the combustion chamber are unimpeded. Alternatively, the fiber optic microphone is located at least partially within the port formed in the injector nozzle, but extends into the combustion chamber to a location that enables the diaphragm to be in close proximity to the combustor flame.

The present disclosure is also directed to a fuel injector for a gas turbine combustor that includes a fuel nozzle for injecting fuel into a gas turbine combustor and a fiber optic microphone for measuring the amplitude and phase of acoustic pressure differentials within a combustion chamber. The fiber optic microphone includes a fiber bundle that has at least one light transmitting fiber and at least one light receiving fiber; and a dynamic pressure-sensing diaphragm operatively spaced apart from a sensing end of the fiber bundle. The diaphragm has a reflective surface and is found from a material capable of withstanding temperatures associated with the combustion process. Moreover, the diaphragm is adapted and configured for deflecting in response to acoustic pressure changes within the combustion chamber.
These and other aspects of the active combustion control system, the fiber optic microphone and the instrumented fuel injector of the subject invention will become more readily apparent to those having ordinary skill in the art from the following detailed description of the invention taken in conjunction with the drawings.

### BRIEF DESCRIPTION OF THE DRAWINGS

So that those having ordinary skill in the art to which the present invention pertains will more readily understand how to employ the systems and methods of the present invention, embodiments thereof will be described in detail hereinbelow with reference to the drawings, wherein:
Fig. 1 is a side elevational view of a portion of a gas turbine engine that includes an active combustion control system, wherein the outer casing of the combustor is cut away and the inner liner sectioned to reveal several instrumented fuel injectors, which form part of the subject invention;
Fig. 2 is a cross-sectional view taken along line 2-2 of Fig. 1, through the combustion chamber of the gas turbine engine, illustrating a plurality of fuel injectors constructed in accordance with a preferred embodiment of the subject invention;
Fig. 3 is a side elevational view of an instrumented fuel injectors constructed in accordance with a preferred embodiment of the subject invention, wherein a fiber optic microphone extends through a port formed in the injector nozzle;
Fig. 4 is a perspective view of an instrumented fuel injector of Fig. 3 located within the combustion chamber of a gas turbine engine;
Fig. 5 is an enlarged perspective view of a fuel nozzle, which forms part of the fuel injector of Fig. 4, with sections of the outer air swirler removed to reveal the fiber bundles and guide tubes of the fiber optic microphones used to measure acoustic pressure differentials within the combustion chamber;
Fig. 6 is a side elevational view of the lower portion of the fuel injector of Fig. 4 depicting two fiber optic microphones embedded within the fuel nozzle;
Fig. 7 provides a schematic overview of a fiber optic microphone which has been constructed in accordance with a preferred embodiment of the present invention;
Fig. 8 provides a partial cross-sectional view of a fiber optic microphone terminating within a port formed in the fuel nozzle;
Fig. 9 provides a partial cross-sectional view of a fiber optic microphone extending from a port formed in the fuel nozzle into the combustion region;
Fig. 10 provides a partial cross-sectional view of a fiber optic microphone which has been constructed in accordance with a further embodiment of the present invention wherein the reflective diaphragm is secured to the guide tube using a longitudinally extending bellows;
Fig.11 provides a partial cross-sectional view of a fiber optic microphone which has been constructed in accordance with a further embodiment of the present invention, wherein the reflective diaphragm is secured to the guide tube using a radially extending bellows;
Fig. 12 is cross-sectional view of a further embodiment of a fiber optic microphone which has been constructed in accordance with the present invention, wherein a lens is positioned within a chamber formed between the seeding end of the fiber bundle and the reflective diaphragm;
Figs. 13a provides an illustration of the principals of operation of a fiber optic microphone which has been constructed in accordance with an embodiment of the present invention;
Fig. 13b is a partial cross-sectional view of the senior end of the fiber optic bundle illustrated in Fig. 13a;
Fig. 14a provides a graphical illustration of the power measured by the receiving fibers of the fiber optic microphone in relation to the distance the diaphragm is spaced from the sensing end of the fiber bundle; and
Fig. 14b provides a graphical representation of the change in power (i.e. slope) measured by the receiving fibers of the fiber optic microphone in relation to the distance the diaphragm is spaced from the sensing end of the fiber bundle.

### DETAILED DESCRIPTION OF THE PREFERRED EMBODIMENTS

Gas turbine engines typically have sensors for measuring operating conditions, including, for example, turbine inlet temperature, compressor speed and pressure, total fuel flow rate to the combustor, and exhaust gas temperature and pressure. In the active combustion control system described in U.S. Patent Application Publication 2007/0119147, which is herein incorporated by reference in its entirety, additional measurements are needed to fine-tune engine performance. These include thermo-chemical characteristics of the combustor flame, oscillating pressure changes that are indicative of combustion instability, and, in some instances, fuel flow rate at one or more fuel injectors delivering fuel to the combustion chamber of the engine.

The active combustion control system described in U.S. Patent Application Publication 2007/0119147 is designed to reduce thermo-acoustic combustion instabilities within the combustion chamber of a gas turbine engine. The systems is particularly well suited for use in combustion systems that are inherently unstable such as, for example, industrial gas turbine engines where lean premixed combustion is used to reduce NOx, civil aircraft that operate lean at high pressure ratios and high power thrust augmented military aircraft engines (afterburners) which utilize locally rich combustion.

The active combustion control system uses a combination of dynamic pressure sensors and optical flame sensors to fine-tune engine performance. In a disclosed embodiment of the system, optical flame sensors, such as those described in U.S. Patent Nos. 7,334,413 and 7,484,369 are used for observing or measuring thermo-chemical characteristics of the combustor flame. The disclosures of each of these patent references are herein incorporated by reference.

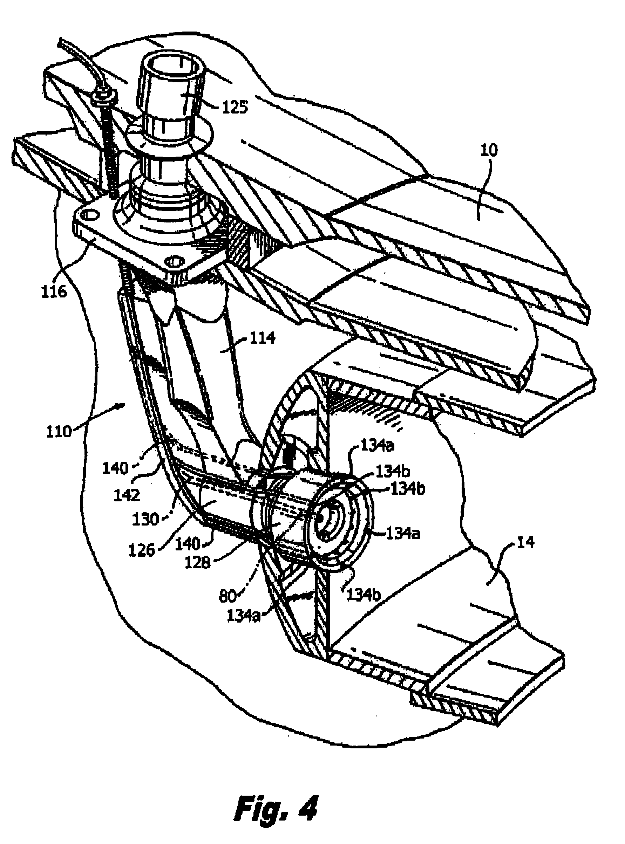

In addition, in the disclosed active combustion control system, piezoelectric devices are utilized as the dynamic pressure sensors which measure acoustic pressure differentials with the combustion chamber. As shown in Fig. 4A of the 2007/0119147 publication, due to their size and inability to withstand the harsh combustion environment, the piezoelectric sensors are mounted on the feed arm of the fuel injector, well upstream of the combustion chamber. Having to remotely locate the piezoelectric sensors reduces the accuracy of the measurement and timing with which the phase relationship of the instability can be measured (i.e. there is a longer time delay for sound traveling from the flame instability to the dynamic pressure sensor).

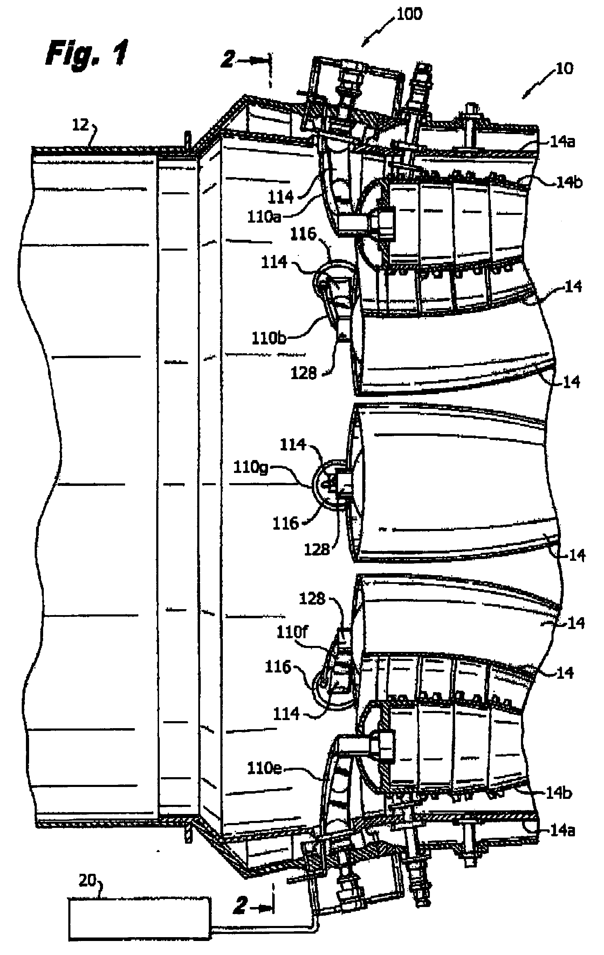

Referring now to the drawings wherein like reference numerals identify similar features or aspects of the subject invention, there is illustrated in Fig. 1 a gas turbine engine 10 that includes, among other things, an active combustion control system 100. In general, gas turbine engine 10 includes a compressor 12, a combustion chamber 14 downstream from the compressor 12, and a turbine (not shown) downstream from the combustion chamber 14. The combustion chamber 14 includes a generally cylindrical outer combustion liner or casing 14a and a generally annular inner combustion liner 14b. Those skilled in the art will readily appreciate that other combustor configurations are possible, such as, for example, a can-type combustor.

The combustion control system 100 includes a plurality of fuel injectors 110, each mounted to the outer casing 14a of engine 10 for issuing atomized fuel into the inner combustion liner 14b of combustion chamber 14, as depicted. As explained in more detail below, one or more of the fuel injectors 110 of system 100 is instrumented in such a manner as to facilitate measurement of thermo-chemical characteristics of the flame within combustion chamber 14, oscillating pressure changes within combustion chamber 14, and the fuel flow rate through the injector itself. In addition, as explained in more detail below, a high speed fuel modulation valve 112 is operatively associated each instrumented fuel injector 110 to control the flow of fuel delivered thereto during engine operation.

As shown in Fig. 1, fuel is delivered to the individual fuel injectors 110, and more precisely to the respective modulations valves 112 associated therewith, by way of a distribution manifold 18. In certain constructions of the present invention, the distribution manifold 18 receives metered amounts of fuel by way of a full authority digital electronic control (FADEC) unit 20. The FADEC unit 20 accepts inputs (e.g., engine operating temperatures and pressures, shaft speeds and torques) from various sensors on or within the turbine engine 10, and commands the position of a primary fuel-metering valve (not shown) based on software control laws developed for the specific engine application. The software control laws are written to optimize power output and drive the gas turbine engine in a safe operating region for a given power command and set of operating conditions. It is envisioned that the FADEC unit can cooperate with combustion control system 100 to actively reducing engine emissions, such as NOx.

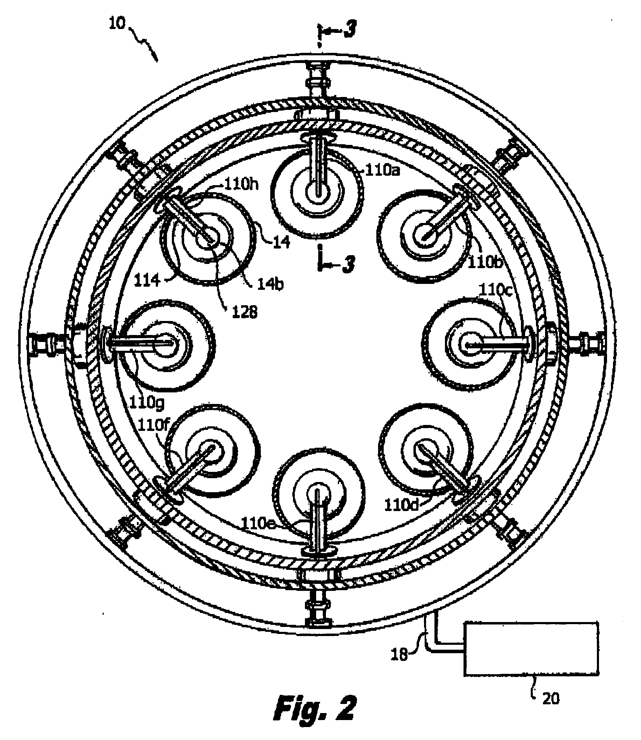

Before turning to the detailed description of the instrumented fuel injectors 110, reference is made to Fig. 2 in which there is illustrated a plurality of instrumented fuel injectors 110a-110h, which are arranged circumferentially about the periphery of the combustion chamber 14. In this arrangement, combustion characteristics including thermo-chemical flame characteristics and acoustic pressure changes can be monitored and measured in a highly localized manner throughout the entire periphery of the combustion chamber 14, by the sensing instrumentation associated with each injector 110a-1110h. Thus, in instances wherein the combustion characteristics in a certain location within the combustion chamber 14 are detected or otherwise measured relative to certain baseline values, the fuel flow to one or more of the injectors corresponding to that location in the combustor can be actively modulated by a modulation valve 112 associated therewith, so as to stabilize combustion or otherwise tune the engine.

Those skilled in the art should appreciate that the number of injectors shown in Fig. 2 and their arrangement is for illustrative purposes only and should not be deemed to limit the subject disclosure in any manner. Furthermore, as described in U.S. Patent Application Publication 2007/0119147, more than one instrumented fuel injector can be operatively associated with a single fuel modulation valve. Thus, while each injector 110a-110h shown in Fig. 2 includes a respective fuel modulation valve 112, it is envisioned that a particular fuel modulation valve 112 can be configured to modulate fuel more than one fuel injector. For example, a single modulation valve can be used to modulate fuel to each injector within a particular quadrant or zone of the combustion chamber 14.

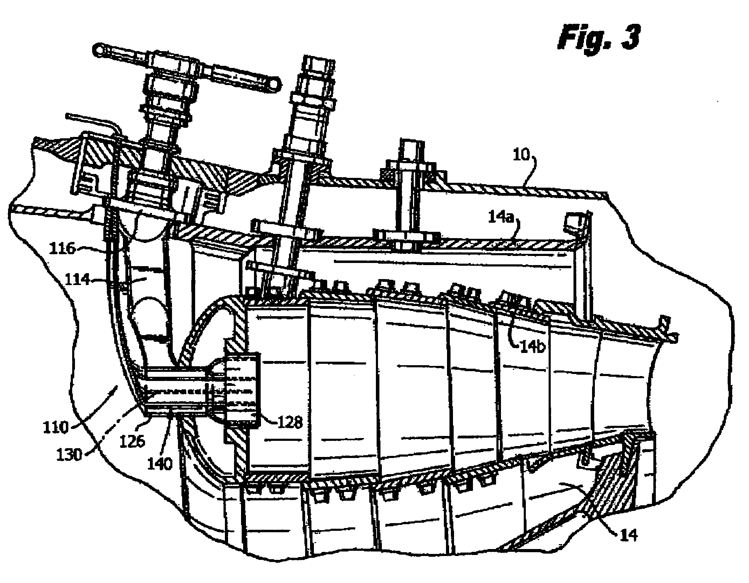

Moreover, as described in Fig. 3 of U.S. Patent Application Publication 2007/0119147, it is possible to construct an active combustion control system wherein only a portion of the fuel injectors are instrumented, while some are not instrumented. In such an arrangement, combustion characteristics are monitored and measured within certain combustion zones or quadrants of the combustion chamber 14.

Indeed, it is envisioned and well within the scope of the subject disclosure that certain engine applications may only require a single instrumented injector 110, while the remainder of the fuel injectors in the engine are configured to operate in a more conventional manner.

Referring now to Figs. 3 and 4, the fuel injectors 110 of the subject invention are mounted or otherwise supported within the combustion chamber 14 of gas turbine engine 10 in a conventional manner. More particularly, each fuel injector 110 includes an elongated feed arm 114 having a support flange 116 for mounting the injector within the combustion chamber 14. The support flange 116 is particularly adapted to secure the injector 110 to the exterior wall or liner 14a of the combustion chamber using conventional fasteners. The fuel injector 110 further includes an inlet port 125 for receiving fuel from the fuel manifold and main engine fuel pump at a desired flow rate. A fixed or variable displacement vane pump may be employed as the main fuel pumping mechanism.

A fuel nozzle 126 depends from the distal end of feed arm 114 and is designed to inject or otherwise issue atomized fuel into the combustion chamber 14. Fuel injector 110 can take the form, for example, of a pressure atomizer or an air blast atomizer. In either configuration, the fuel nozzle 126 includes an outer air swirler 128 configured to impart an angular component of velocity to the air flowing through the nozzle body.

Referring now to Figs. 3-6, in accordance with a preferred embodiment of the subject invention, the fuel injectors 110 are instrumented in such a manner so as to facilitate measurement of thermo-chemical characteristics of the flame within combustion chamber 14 and acoustic pressure differentials within combustion chamber 14. More specifically, the fuel injectors 114 are instrumented with optical flame sensors 130 and fiber optic microphones 140 located or otherwise embedded within the outer air swirler 128 of fuel nozzle 126 for observing and/or measuring combustion conditions within the combustion chamber 14 of gas turbine 10, downstream from the fuel nozzle.

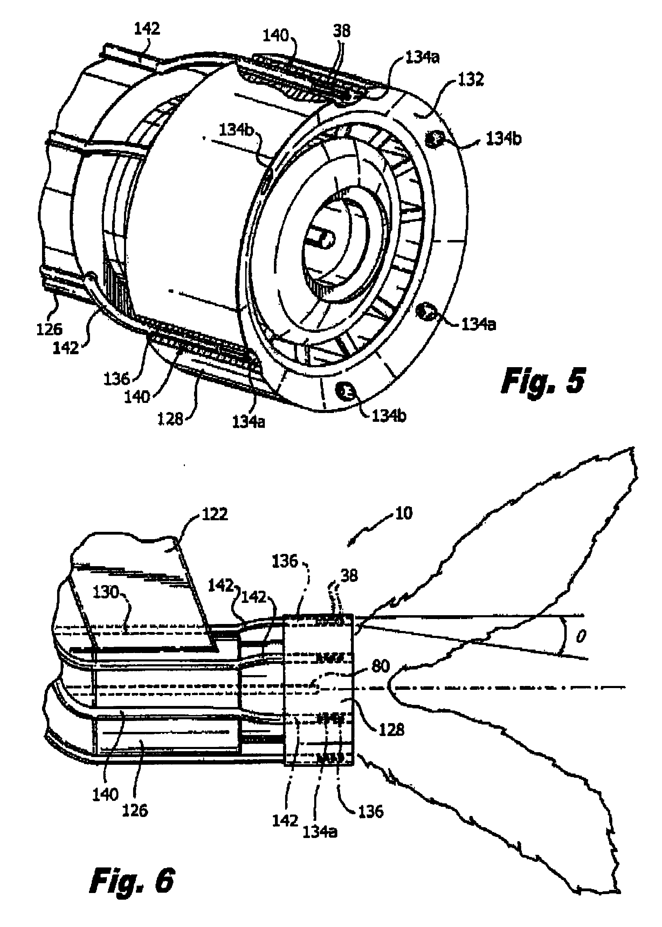

To accommodate the fiber optic microphones 140 and the optical flame sensors 130 in a non-intrusive manner, a plurality of circumferentially spaced apart viewing ports or passages are formed in the fuel nozzle and extend to the leading edge 132 of the outer air swirler 128, creating a sensor array. As shown in Figs. 4 and 5, ports 134a house the fiber optic microphones 140 and ports 134b house the optical flame sensors 130.

For example, as best illustrated in Fig. 4, the leading edge 132 of the outer swirler 128 can include six viewing ports 134, which are preferably spaced substantially equidistant from one another (e.g., about 60° apart), and either an optical flame sensor 130 or a fiber optic microphone 140 are accommodated within each viewing port 134.

The optical flame sensors 130 can be constructed, for example, as described in U.S. Patent Nos, 7,334,413 and 7,484,369, the disclosures of which are incorporated by reference into the present application and will not be reproduced herein.

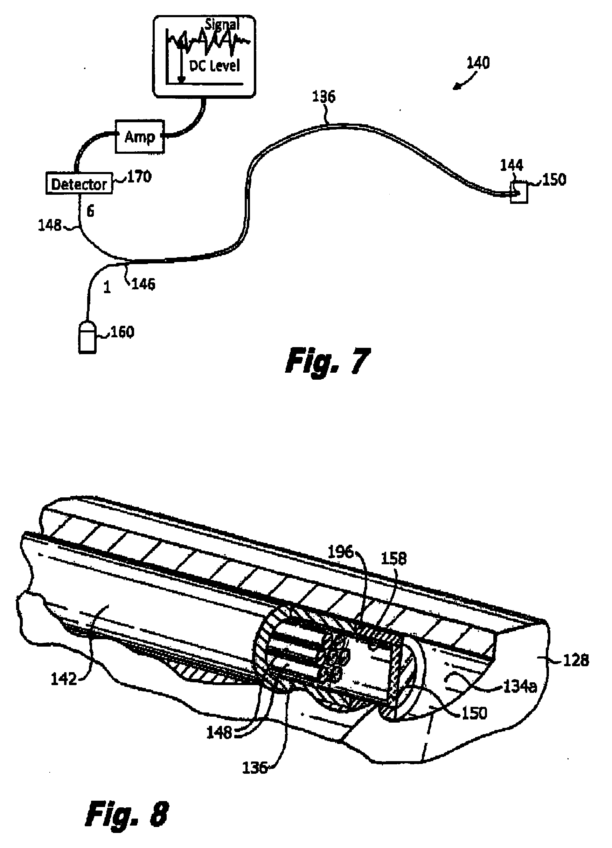

A schematic representation of a fiber optic microphone which has been constructed in accordance with an embodiment of the present invention is shown in Fig. 7. As shown therein, each fiber optic microphone 140 includes a fiber bundle 136 having at least one light transmitting fiber 146 and at least one light receiving fiber 148; and a dynamic pressure-sensing diaphragm 150, which, as will be discussed supra, is operatively spaced apart from a sensing end 144 of the fiber bundle 136. As will be discussed in detail hereinbelow, the diaphragm 150 has a reflective surface which faces the sensing end of the fiber bundle; is formed from a material capable of withstanding temperatures associated with flame exposure; and is adapted and configured for deflecting in response to acoustic pressure changes within the combustion chamber 14.

With continuing reference to Fig. 7, fiber optic microphone 140 further includes a light source 160 and an optical detector 170. It is envisioned that the light source is a LED or laser diode and the optical detector can be a silicon detector which may include an integral amplifier. However, those skilled in the art will readily appreciate that other types of light sources and optical detectors can be used without departing from the inventive aspects of the present disclosure. As will be discussed hereinbelow, in certain constructions, such as those that include a blackbody sensor for measuring the temperature of the diaphragm, it preferable to utilize a light source that emits light at a wavelength that is close to the UV range and a compatible detector.

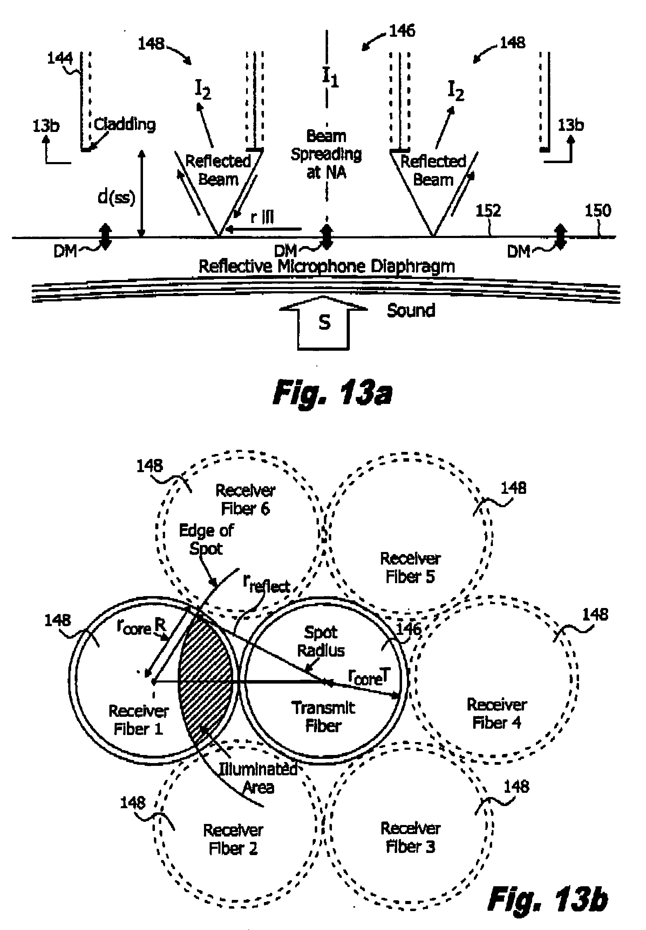

With reference to Figs. 13a and 13b, in operation, the light source (not shown) supplies light to the light transmitting fibers 146 of the fiber bundle 136. In the construction disclosed in Figs. 13a and 13b, a single, centrally positioned, light transmitting fiber 146 is used in fiber bundle 136.

The light is transmitted by the light transmitting fiber 146 at a first intensity (I₁), so as to illuminate the reflective surface 152 of the diaphragm 150. The light beam emanating from the light transmitting fiber 146 has an initial radius of r_{coreT} and spreads out to a radius of rₘ when it reaches the reflective surface 152 of the diaphragm. The light is then rejected by the oscillating diaphragm 150 onto the light receiving fibers 148, which in the illustrated embodiment includes six fibers. The oscillation of the diaphragm is indicated by the "DM" arrows shown in Fig. 13a. An optical detector measures the intensity (I₂) of the light reflected by the diaphragm 150 onto the six light receiving fibers 148. A dynamic comparison of the first intensity (I₁) to the second intensity (I₂) is indicative of the acoustic pressure differential within the combustion chamber. This comparison not only allows for the determination of the amplitude of the acoustic pressure wave, but also the periodicity of the wave.

As shown in Fig, 13a, the transmission fiber 146 has a core radius designated as r_{coreT} and the receiving fibers have a core radius of r_{coreR}. The radius of the reflected light (r_{refl}) will depend on the distance (d(ss)) the sensing end 144 of the fiber bundle is from the moving reflective surface 152 of the diaphragm 150. Those skilled in the art will readily appreciate that the r_{refl} varies as the diaphragm moves in response to acoustic pressure waves emanating from the combustion region.

Additionally, those skilled in the art will readily appreciate that the number of light transmitting fibers and light receiving fibers can vary without departing from the inventive aspects of the present disclosure. The optimum number of fibers used in a bundle can depend on factors, such as for example, the size constraints associated with the application, the size/diameter of the diaphragm, and the signal-to-noise ratio.

In a preferred embodiment of the present invention, the transmission and receiving fibers 146/148 are made from silica and are coated with gold. The gold coating protects the fibers from mechanical damage and exposure to moisture, which is very damaging to silica fibers. The sensing end of the fiber bundle can be held together with a collet or ferrule made from, for example, platinum or a platinum alloy (e.g. 90% platinum, 10% rhodium). In the presently disclosed embodiment, in order to minimize the diameter of the fiber bundle, the transmission and receiving fibers have a core diameter of 200 microns.

If fiber optic microphone 140 is to be used in a harsh environment, such as in a combustion chamber, it is critical that the reflectivity of the diaphragm material be consistent. With most materials, reflectivity will change dramatically with oxidation and temperature. Through testing, the inventors of the present disclosure have determined that a gold plated platinum or platinum alloy can be used as the diaphragm material for combustor applications. Ideally, the diaphragm material is about 0.001 inch think. Gold is a good reflector and is very corrosion resistant. Platinum is also very corrosion resistant and holds its strength relatively well at higher temperatures. The inventors have also successfully tested a gold coated brass diaphragm.

Fig. 8 illustrates the termination of fiber optic microphone 140 within a passage/port 134a formed in fuel nozzle 126. In this construction, the reflective diaphragm 150 is positioned within passage 134a, slightly upstream of the combustion chamber. Moreover, the fiber optic microphone 140 includes a thermocouple 158 for measuring the temperature of the diaphragm, so that changes in the diaphragm's modulus of elasticity due to changes in the operating temperature can be accounted for when determining the acoustic pressure in the combustion chamber.

It is well known that the modulus of elasticity of a metal or alloy varies greatly with temperature. See for example, V.P. Ketova et al., Effect of Alloying on the Modulus of Elasticity of Platinum Alloys, Metallovendenie i. Termicheskaya Obrabotka, No, 7, pp, 65-67, July, 1970, which is herein incorporated by reference. Therefore, it is important to know the real-time temperature of the diaphragm when it is used in a fiber optic microphone application where the operating temperature of the system changes.

In alternative constructions of the present invention, the fiber optic microphone can utilize other devices or techniques for measuring the temperature of the diaphragm material. For example, an optical fiber thermometer (OFT), such as the one disclosed in U.S. Patent 4,576,486, in conjunction with an infrared detector can be used. U.S. Patent 4,576,496 is herein incorporated by reference in its entirety. Such a device will allow non-contact measurement of the diaphragm temperature. The fiber optic thermometer could be one of several types, including, light-pipe, blackbody, dual-wavelength, or gap type. If a blackbody type, such as a sapphire blackbody sensor, is used to determine the temperature of the diaphragm, the light source for the microphone should ideally emit light having a wavelength near the UV region, since the blackbody sensor emits thermal radiation (NIR and IR). A representative blackbody sensor which can be used with the present invention is an InGaAs or indium gallium arsenide (1.2 to 2.0 micron range) tandem blackbody sensor, such as the one described by J. Novak et al. in A Silicon-InGaAs Tandem Photodetector for Radiation Thermometry, Meas. Sci. Technol. 6 1547-1549 (Oct. 1995), which is herein incorporated by reference.

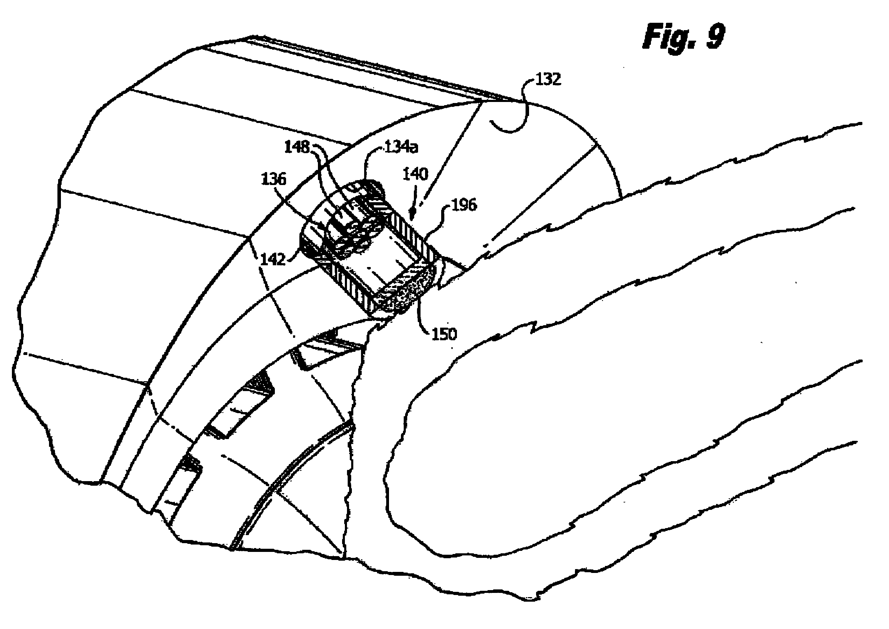

Fig. 9 illustrates an alternative technique for terminating the fiber optic microphone in a combustor application, wherein a sheath 196 surrounds the fiber bundle and supports the diaphragm within the combustion chamber in close proximity to the flame. Such a installation allows for a more accurate measurement of the magnitude and timing of the acoustic pressure differentials.

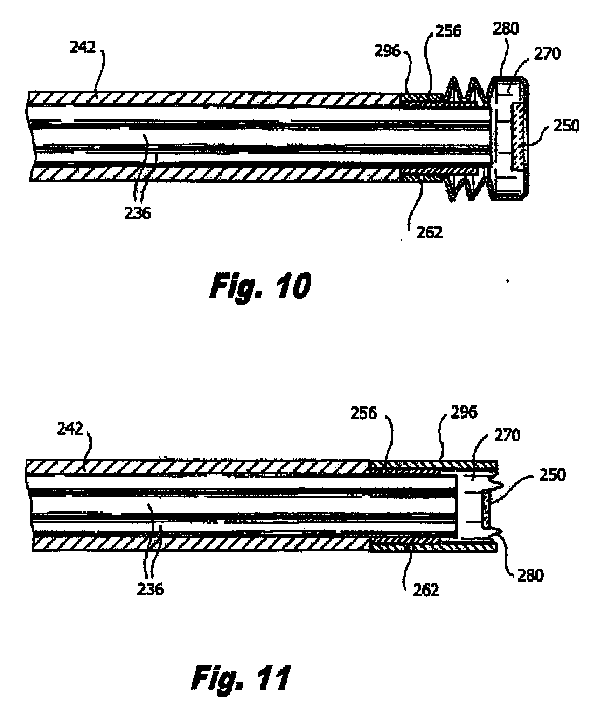

Figs. 10 and 11 disclose alternative constructions of the present invention in which a bellows is used for securing the diaphragm to the guide tube. Similar to the previously described embodiments, the fiber optic microphone includes a fiber bundle 236 which is supported predominantly within a guide tube 242. A sensing end of the fiber bundle 236 extends beyond the end of the guide tube 242 and is held together using a collet or ferrule 256. Moreover, a sheath 296 extends from the end of the guide tube 242. A vent hole 262 is provided in the sheath 296 so that the chamber 270 formed between the diaphragm 250 and the sensing end of the fiber bundle 236 can be exhausted. The vent hole can be protected from contamination with a porous ceramic.

However, unlike the previously described embodiment, wherein the diaphragm is mounted directly to the sheath or guide tube, in the embodiments shown in Figs. 10 and 11, a bellows 280 secures the diaphragm 250 to the sheath 269. In the embodiment shown in Fig. 10 the bellows extend longitudinally and in the embodiment shown in Fig. 11, the bellows extends radially. The use of a bellows allows for greater deflection of the reflecting surface when thicker or less flexible materials are used for the diaphragm. The present inventors have tested the constructions shown in Figs. 10 and 11 and have found that they result in an improved signal-to-noise ratio in comparison in comparison to constructions that do not use a bellows.

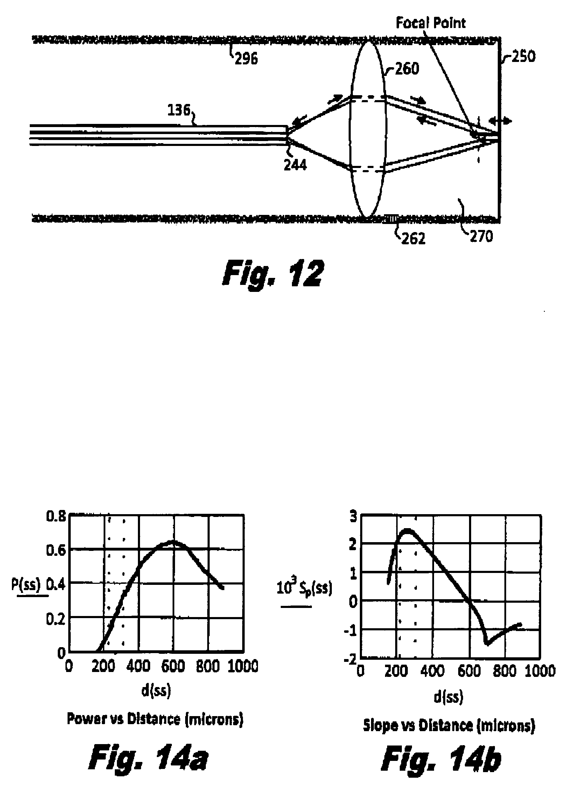

Fig.12 provides yet a further embodiment of the present invention wherein a window or lens 260 is positioned between the sensing end 244 of the fiber bundle 242 and the diaphragm 250. The use of a lens 260 allows the fiber bundle 242 to be isolated from the high pressure environment of the combustion chamber as a pressure seal is formed around the periphery of the lens. Like before, a vent hole 262 is provided so that the chamber 270 formed between the lens 260 and the diaphragm 250 can be exhausted. The vent hole can be protected from contamination with a porous ceramic. As described with respect to Fig. 9, the diaphragm is supported by a sheath 296 formed around the fiber bundle 242 and extending beyond its sensing end 244.

In this construction, the reflected spot varies in size (i.e., r_{refl} changes) as the distance from the lens 260 to the diaphragm 250 changes due to the flexure of the diaphragm 250 caused by pressure waves formed in the combustion chamber.

It should be noted that the use of a vent hole in the constructions shown in Figs. 10-12 is critical, since the microphone will operate continuously in a high pressure environment (300-600 psi). Therefore, the vent hole must remain open at all times. In a combustor, soot is the major contributor to contamination of the surfaces. However, when the ceramic covered vent hole is exposed to about at least 450° Celsius, soot will burn off and the vent hole will remain unobstructed.

Referring again to Fig. 5, those skilled in the art will readily appreciate that the number of viewing ports 134 formed in the outer air swirler 128 of the fuel nozzle 126 can very from one nozzle type to another, and/or from one engine type to another. For example, four viewing ports spaced 90° apart from one another can be provided in a particular nozzle body constructed in accordance with the subject invention.

It has been found through experimentation that disposing the fiber optic microphones at the leading edge of the fuel nozzle 126 is advantageous, since it will result in the minimum amount of time delay between the occurrence of the acoustic pressure event within the combustion chamber and the sensing of the pressure wave by the diaphragm.

It should also be understood by those skilled in the art that the fiber optic microphones disclosed herein can be embedded in other parts of the nozzle body, other than the outer air swirler, without departing from the spirit or scope of the subject invention. That is, depending upon the type and structure of the nozzle body, the location of the embedded sensors can vary, so long as the pressure waves are unobstructed downstream from the fuel nozzle, and the sensors remain non-obtrusive in that they do not negatively affect the overall performance of the fuel nozzle.

Each optical fiber bundle 136 is disposed within a temperature resistant guide tube 142 for additional thermal protection, to facilitate handling during assembly and attachment to the fuel nozzle. For example, the fiber bundles 136 may be disposed within stainless steel guide tubes or a similar protective structure. The distal end of each guide tube 142 is swaged to secure the fibers therein, and cemented within a corresponding viewing port 134 in a manner that accommodates thermal expansion and contraction. For example, ceramic cement may be used to secure the distal end of each guide tube 142 within a viewing port 134. This will ensure the integrity of the fiber bundles throughout a multiplicity of engine operating cycles. The guide tubes 142 are preferably embedded in or otherwise mounted to the feed arm 122 of fuel injector 120. For example, the guide tubes may be positioned within channels formed in the feed arm 122 of fuel nozzle 120. The proximal end of each fiber bundle 136 terminates at a location external to the combustion chamber 14 in a conventional optical connector (not shown).

In operation, the dynamic pressure sensor 130 of an instrumented fuel injector 110 provides an output signal indicative of a dynamic pressure measurement to an electronic controller, which analyzes the signal using a signal processor. Based upon the signal analysis, the controller commands the modulation valve 112 associated with injector 110 to modulate fuel flow to the injector 110 in a manner that maintains combustion stability, at least locally within the zone of the combustor with which the injector is associated.

Each instrumented fuel injector 110 of the active combustion control system 100 of the subject invention may include a fuel flow sensor for monitoring fuel flow rates at each fuel injector. The location of the fuel flow sensor within the fuel injector can vary, as long as it is positioned to provide a precise measurement of the fuel flowing to the nozzle.

Although it is envisioned that each sensor in fuel injector 110 can directly communicate with the electronic controller, it is envisioned that a sensor interface may be disposed within each injector 110 for receiving input signals from the fiber optic microphone 140 and the flame sensor 130, as well as other sensors that may be included in or on the fuel injector. The sensor interface would be adapted and configured to communicate with the electronic controller, which in turn is adapted and configured to communicate with the modulating valve assembly 112. It is envisioned that the sensor interface would include digital communication features for communicating with the electronic controller.

Referring now to Figs. 11a and 11b, which illustrate graphically the changed in received power and slope versus separation distance (d(ss)) in microns for a microphone made from 200/220 micron fiber and having reflection losses ignored. As shown in these figures, the optimum spacing is in the 220-360 micron range, where the slope is maximized and changing least and the intensity is not too large, so the optical sensor will not be saturated.

The use of a fiber optic microphone along with an optical flame sensor has a several advantages over current methods for combustion control. As noted previously, current systems use a piezoelectric sensor for detection of acoustic instabilities. The piezoelectric detectors are mounted well behind the injector because it is so large it could cause flow instabilities if mounted in the injector flow paths. Even so, the size of these sensors can still influence the inlet air to the injector. Also, small size is important for aircraft parts in reducing weight and making installation less intrusive. Another advantage if the microphone construction of the present invention is its close proximity to the flame. The closer the microphone to the flame, the more accurate the phase relationship of the instability can be measured due to the smaller time delay in sound traveling from the flame instability to the microphone. This also provides less of a difference in the optical flame signal and the acoustic signal such that the out-of-phase fuel pulses can be generated more accurately.

Although the active combustion control system, fuel injectors and fiber optic microphones of the subject invention and each of the components thereof, has been described with respect to preferred embodiments, those skilled in the art will readily appreciate that changes and modifications may be made thereto without departing from the spirit and scope of the subject invention as defined by the appended claims.

## Claims

1. A fuel injector for a gas turbine engine combustor, comprising:
a) a fuel nozzle for injecting fuel into the gas turbine engine combustor; and
b) a fiber optic microphone operatively associated with the fuel nozzle for measuring acoustic pressure differentials within a combustion chamber of the gas turbine engine combustor, the fiber optic microphone including:
a fiber bundle having at least one light transmitting fiber and at least one light receiving fiber;
a dynamic pressure-sensing diaphragm operatively spaced apart from a sensing end of the fiber bundle, the diaphragm having a reflective surface and being formed from a material capable of withstanding temperatures associated with flame exposure, wherein the diaphragm is adapted and configured for deflecting in response to acoustic pressure changes within the combustion chamber;
a light source for supplying light to the at least one light transmitting fiber of the fiber bundle at a first intensity and illuminating the reflective surface of the diaphragm; and
an optical detector for measuring a second intensity of the light reflected by the diaphragm onto the light receiving fibers, whereby a dynamic comparison of the first intensity to the second intensity is indicative of the acoustic pressure differential within the combustion chamber.

2. A fuel injector for a gas turbine engine combustor as recited in claim 1 or a system as recited in claim 12, wherein the transmission and receiving fibers are made from silica and are coated with gold.

3. A fuel injector for a gas turbine engine combustor as recited in claim 1, wherein at least one of: -
the transmission and receiving fibers have a 200 micron core diameter;
the fiber bundle includes one transmission fiber and six receiving fibers.

4. A fuel injector for a gas turbine engine combustor as recited in claim 1 or a system as recited in claim 12, wherein the fiber bundle includes a crimped metal collet for holding the fibers in a bundle at the sensing end of the fiber bundle, and
optionally:-
the collet is made from platinum or a platinum alloy.

5. A fuel injector for a gas turbine engine combustor as recited in claim 1 or a system as recited in claim 12, further including means for measuring the temperature of the diaphragm.

6. A fuel injector for a gas turbine engine combustor as recited in claim 5 or a system as recited in claim 5, wherein the means for measuring the temperature of the diaphragm includes a thermocouple in contact with the diaphragm.

7. A fuel injector for a gas turbine engine combustor as recited in claim 5 or a system as recited in claim 5, wherein the means for measuring the temperature of the diaphragm includes a fiber optic thermometer, and
optionally:-
wherein the fiber optic thermometer used to measure the temperature of the diaphragm is a sapphire blackbody type.

8. A fuel injector for a gas turbine engine combustor as recited in claim 1 or a system as recited in claim 12, further including a lens positioned between the sensing end of the fiber bundle and the diaphragm.

9. A fuel injector for a gas turbine engine combustor as recited in claim 1, wherein at least one of:-
the fiber optic microphone is mounted at least partially within a port formed in the injector nozzle;
the dynamic pressure-sensing diaphragm includes gold plated platinum or gold plated platinum alloy.

10. A fuel injector for a gas turbine engine combustor as recited in claim 1, wherein the fiber optic microphone is located at least partially within a port formed in the injector nozzle and extends to a location that enables the diaphragm to be in close proximity to the combustor flame.

11. A fuel injector for a gas turbine engine combustor as recited in claim 1, wherein the diaphragm is supported by a longitudinally extending bellows; or wherein the diaphragm is supported by a radially extending bellows.

12. A system for actively controlling combustion in a combustion chamber of a gas turbine engine comprising:
a) a fuel injector for issuing fuel into a combustion chamber of a gas turbine engine, the fuel injector including:
i) a fiber optic microphone for measuring acoustic pressure differentials within the combustion chamber; and
ii) a flame sensor for observing flame characteristics within the combustion chamber;
b) a valve assembly for controlling flow of fuel to the injector; and
c) an electronic controller operatively associated with the fuel injector for commanding the valve assembly to deliver fuel to the fuel injector at a commanded flow rate, based at least in part upon an amplitude of the acoustic pressure differentials measured by the fiber optic microphone.

13. A system as recited in claim 12, wherein the fiber optic microphone is operatively associated with the fuel injector and includes:
a fiber bundle having at least one light transmitting fiber and at least one light receiving fiber; and
a dynamic pressure-sensing diaphragm operatively spaced apart from a sensing end of the fiber bundle, the diaphragm having a reflective surface and being formed from a material capable of withstanding temperatures associated with combustion, wherein the diaphragm is adapted and configured for deflecting in response to acoustic pressure differentials within the combustion chamber.

14. A system as recited in claim 12, comprising a plurality of fuel injectors, wherein at least one of the fuel injectors includes a fiber optic microphone and a flame sensor; and
optionally:-
wherein each of the fuel injectors includes a fiber optic microphone and a flame sensor; and
further optionally:-
wherein each fuel injector having a fiber optic microphone and a flame sensor, also has a valve assembly operatively associated therewith.

15. A system as recited in Claim 12, wherein the fuel injector includes an injector body having a nozzle for issuing atomized fuel into the combustion chamber of a gas turbine, and
optionally:-
wherein the sensing end of the fiber optic microphone is disposed within a port formed in the nozzle.

16. A system as recited in claim 13, wherein the dynamic pressure-sensing diaphragm includes gold plated platinum or gold plated platinum alloy substrate

17. A fuel injector for a gas turbine combustor, comprising: a) a fuel nozzle for injecting fuel into a gas turbine combustor; and b) a fiber optic microphone for measuring acoustic pressure differentials within a combustion chamber, the fiber optic microphone including: a fiber bundle having at least one light transmitting fiber and at least one light receiving fiber; a dynamic pressure-sensing diaphragm operatively spaced apart from a sensing end of the fiber bundle, the diaphragm having a reflective surface and being formed from a material capable of withstanding temperatures associated with combustion, wherein the diaphragm is adapted and configured for deflecting in response to acoustic pressure changes within the combustion chamber; and means for measuring in real-time the temperature of the diaphragm.
